# EUROPEAN PATENT SPECIFICATION

(11) **EP 1 652 741 B1**
(45) Date of publication and mention of the grant of the patent: **22.04.2009**
(21) Application number: 05021276.0
(22) Date of filing: 29.09.2005
(51) Int. Cl.: B60R 22/34

(54) **Seat belt retractor**
Sicherheitsgurtaufroller
Rétracteur de ceinture de sécurité

(30) Priority: 29.10.2004 JP 2004317013
(43) Date of publication of application: 03.05.2006
(73) Proprietor: TAKATA CORPORATION, Minato-ku, Tokyo 106-8510 (JP)
(72) Inventor: Nomura, Yasuaki, c/o Takata Corporation, Minato-ku Tokyo 106-8510 (JP)
(74) Representative: Banzer, Hans-Jörg

(56) References cited:
- WO-A-01/14176
- WO-A-97/33777
- WO-A-20/04014704
- DE-A1- 4 314 176
- DE-A1- 10 052 112
- DE-A1- 19 927 731
- US-A1- 2003 178 836

## Description

The present invention relates to a seat belt retractor to be installed in a vehicle.

Conventionally, a seat belt apparatus is known, which is structured to protect an occupant in a vehicle by a seat belt (webbing) restraining the occupant. For example, the Japanese translation of PCT international application No. 2003-507252 discloses a structure of a seat belt retractor of a seat belt apparatus, in which a spool (winding shaft) can be rotated in a belt-winding direction or a belt-unwinding direction for a seat belt by an electric motor.

The technology described in the Japanese translation of PCT international application No. 2003-507252 gives us a possibility of using an electric motor to conduct the action of the spool for winding or unwinding the seat belt, as a structure of the seat belt retractor. With regard to the design of such seat belt apparatuses, a further technical requirement exists for reducing the size of the seat belt retractor to correspond to the configuration of a pillar or the like as a narrow space for accommodating the seat belt retractor.

DE 43 14 176 A1 discloses a seat belt retractor having the features of the preamble of claim 1.

WO 01/14176 A1 discloses a seat belt retractor having a planetory gear mechanism.

Therefore, the present invention has been made in view of the above requirement and it is an object of the present invention to provide a technology effective for the miniaturization of a seat belt retractor to be installed in a vehicle.

For achieving the object, the present invention is made. The present invention can be typically adopted to a seat belt retractor to be installed in an automobile. The present invention can also be applied to a technology for a seat belt retractor to be installed in a vehicle other than the automobile.

According to the present invention, the object is achieved by a seat belt retractor according to claim 1 or 3, a seat belt apparatus according to claim 10, and a vehicle according to claim 11. The dependent claims define preferred or advantageous embodiments of the invention.

The seat belt retractor according to an aspect of the invention comprises at least a spool, a motor, a motor speed-reduction mechanism, and a control means. The spool is a member which is formed into a hollow cylindrical shape and is capable of winding a seat belt onto a spool outer periphery thereof or unwinding the seat belt from the spool outer periphery. The spool outer periphery is adapted to be a surface with which the seat belt is in contact. The seat belt is a long belt to be worn by a vehicle occupant seated in a seat and is sometimes called "webbing". Typically, the vehicle occupant seated in the vehicle seat is restrained by the seat belt when restraint is required such as, e.g., in a vehicle collision, thereby ensuring the protection of the vehicle occupant. The motor is accommodated in the hollow space of the spool and has a function of rotating the spool in the belt winding direction or the belt unwinding direction. The motor speed-reduction mechanism has a function of reducing the rotational speed of the motor via a plurality of gears between the driving shaft of the motor and the spool. The control means of this invention is a means for controlling the operation (the rotational speed, the rotational direction) of the motor. The control means is typically composed of a CPU (central processing unit), an input/output unit, a storage unit, a peripheral unit, and the like.

According to this aspect, in the state in which the motor is accommodated, a motor housing of the motor extends along the width direction of the spool outer periphery of the spool such that the axial direction of the motor coincides with the width direction of the spool outer periphery, and the size of the motor housing in the axial direction and the size of the spool outer periphery in the width direction are broadly approximately equal to each other. According to this structure, the width of the spool is reduced to correspond to the size of the motor housing in the axial direction, thereby reducing the overall size relating to the axial direction of the seat belt retractor. Therefore, the reduction in size of the seat belt retractor to be installed in the vehicle is achieved, thereby increasing the degree of freedom of location of the seat belt retractor in the vehicle. The overall size of the spool in the width direction is generally larger than the size of the spool outer periphery in the width direction. However, when the overall size of the spool in the width direction is substantially the same as the size of the spool outer periphery in the width direction, the size of the motor housing in the axial direction is broadly equal to not only the size of the spool outer periphery in the width direction but also the overall size of the spool in the width direction.

According to this structure in which the motor is accommodated in the hollow space of the spool, a reduction in size and a reduction in weight of the seat belt retractor are achieved and, in addition, the noise insulation and the electromagnetic-wave shielding in the operation of the motor are improved.

According to this structure of this aspect of the invention in which the spool is rotated by the motor, a spring mechanism for biasing the spool in the belt winding direction can be eliminated. The spring mechanism is generally located adjacent to the spool in the width direction of the spool. Therefore, the elimination of the spring mechanism reduces the size relating to the width direction of the spool, thereby enabling the further reduction in overall size of the seat belt retractor.

The seat belt retractor may be adapted such that the size of the motor housing in the axial direction and the size of the spool outer periphery in the width direction are also broadly approximately equal to the width of the seat belt. That is, the size of the motor housing in the axial direction and the size of the spool outer periphery in the width direction are set to correspond to the standard width of the seat belt. According to this structure, the overall size relating to the axial direction of the seat belt retractor can be reduced, thereby achieving the further reduction in size of the seat belt retractor to be installed in the vehicle. The motor housing is designed to have the maximum size in the axial direction within the range of the width of the spool, allowing the use of a motor with higher output.

The seat belt retractor according to another aspect of the invention comprises at least a spool, a motor, a motor speed-reduction mechanism, and a control means, substantially similar to the seat belt retractor above.

According to this aspect, in the state in which the motor is accommodated, a motor housing of the motor extends along the width direction of the spool outer periphery of the spool such that the axial direction of the motor housing coincides with the width direction of the spool outer periphery, and the motor speed-reduction mechanism is disposed adjacent to the motor housing in the axial direction of the motor housing. In addition, a first size relating to a length in the width direction of the spool outer periphery and a second size which is the size relating to a length in the axial direction of the motor housing plus the size relating to a length in the axial direction of the motor speed-reduction mechanism are broadly approximately equal to each other. According to this structure, the width of the spool is reduced to correspond to the size of a combination of the motor housing and the motor speed-reduction mechanism in the axial direction. Therefore, the reduction in overall size of the seat belt retractor to be installed in the vehicle is achieved, thereby increasing the degree of freedom of location of the seat belt retractor in the vehicle. The overall size of the spool in the width direction is generally larger than the size of the spool outer periphery in the width direction. However, when the overall size of the spool in the width direction is substantially the same as the size of the spool outer periphery in the width direction, the second size which is the size relating to the axial direction of the motor housing plus the size relating to the axial direction of the motor speed-reduction mechanism is broadly equal to not only the first size of the spool outer periphery in the width direction but also the overall size of the spool in the width direction.

According to the structure of this aspect of the invention, in which the motor is accommodated in the hollow space of the spool, the reduction in size and the reduction in weight of the seat belt retractor are achieved and, in addition, the noise insulation and the electromagnetic-wave shielding in the operation of the motor are improved.

According to the structure of this aspect of the invention in which the spool is rotated by the motor, a spring mechanism for biasing the spool in the belt winding direction can be eliminated. The spring mechanism is generally located adjacent to the spool in the width direction of the spool. Therefore, the elimination of the spring mechanism reduces the size relating to the width direction of the spool, thereby enabling the further reduction in overall size of the seat belt retractor.

The seat belt retractor according to this aspect may be adapted such that the first size and the second size are also broadly approximately equal to the width of the seat belt. That is, the first size relating to the width direction of the spool outer periphery and the second size which is the size relating to the axial direction of the motor housing plus the size relating to the axial direction of the motor speed-reduction mechanism are set to correspond to the standard width of the seat belt. According to this structure, the overall size relating to the axial direction of the seat belt retractor can be reduced, thereby achieving the further reduction in size of the seat belt retractor to be installed in the vehicle. The motor housing is designed to have the maximum size in the axial direction within the range of the width of the spool, allowing the use of a motor with higher output.

The seat belt retractor may further be adapted such that the gears of the motor speed-reduction mechanism are arranged to extend on the same plane perpendicular to the axial direction of the motor housing. According to this structure, the size relating to the axial direction of the motor speed-reduction mechanism can be reduced by arrangement of the plural gears, thereby further reducing the overall size relating to the axial direction of the retractor including the motor speed-reduction mechanism. Therefore, a further reduction in size of the seat belt retractor to be installed in the vehicle is achieved.

The seat belt retractor according to any one of the above aspects may further be adapted such that the spool and the motor housing are supported by each other at least via a bearing mechanism disposed between the inner periphery of the spool and the outer periphery of the motor housing. For composing the suitable bearing structure, the present invention allows the adoption of another bearing mechanism in addition to the bearing mechanism disposed between the inner periphery of the spool and the outer periphery of the motor housing, if necessary. According to this structure, the rotation of the spool relative to the motor housing is allowed by the bearing structure with simple structure.

The seat belt retractor may still further be adapted to be accommodated in an accommodating space in a rear pillar of an automobile which is located on the rear side of the A-pillar of the automobile. The "rear pillar" used here corresponds to a B-pillar or a C-pillar in case of an automobile having two rows of seats or corresponds to a B-pillar, a C-pillar, or a D-pillar in case of an automobile having three rows of seats. This structure enables one to provide a compact seat belt retractor which can be accommodated in the accommodating space of the rear pillar, the size of which is limited.

The seat belt retractor may also be adapted to be accommodated in an accommodating space in a seat of an automobile. The "seat" used here widely includes a driver's seat and a passenger's seat in a first-row, and second- and third-row seats. This structure enables to provide a compact seat belt retractor which can be accommodated in the accommodating space of the seat, the size of which is limited.

If the seat belt retractor is adapted to be accommodated in a respective space, the seat belt retractor may be adapted such that, in the state in which the seat belt retractor is accommodated in the accommodating space, the spool outer periphery of the spool extends in the longitudinal direction of a vehicle, and the size of the spool outer periphery in the width direction and the size of the accommodating space in the rear pillar or the accommodating space in the seat in the longitudinal direction of the vehicle are broadly equal to each other. This structure enables to provide a compact seat belt retractor which can be accommodated in the accommodating space in the rear pillar of which size is limited in the longitudinal direction of the vehicle or in the accommodating space of the seat of which size is limited.

The seat belt apparatus of the invention comprises at least a seat belt retractor according to any one aspect of the invention, and a seat belt to be worn by a vehicle occupant seated in a seat and which can be wound onto or unwound from a spool outer periphery of a spool of the seat belt retractor.

According to this structure, the width of the spool is reduced to correspond to the size of the motor housing in the axial direction, thereby reducing the overall size relating to the axial direction of the seat belt retractor. Therefore, the reduction in size of the seat belt apparatus to be installed in the vehicle is achieved, thereby increasing the degree of freedom of location of the seat belt apparatus in the vehicle.

The vehicle with a seat belt apparatus according to the invention is a vehicle in which the seat belt apparatus according to the invention is accommodated in an accommodating space in a pillar or an accommodating space in a seat. This structure enables to provide a vehicle in which a miniaturized seat belt apparatus is accommodated in an accommodating space in a pillar of the vehicle or in an accommodating space in a seat of the vehicle.

As described above, the present invention can provide a technology, particularly relating to the structure of a seat belt retractor, that is effective for the reduction in size of the seat belt retractor to be installed in a vehicle by designing it such that the size of a motor housing in the axial direction and the size of the outer periphery of a spool in the width direction are broadly approximately equal to each other.

Hereinafter, embodiments of the present invention will be described in detail with reference to drawings.
Fig. 1 shows a schematic structure of a seat belt apparatus, which is installed in a vehicle, of an embodiment according to the present invention.
Fig. 2 is a sectional view of a retractor shown in Fig. 1.
Fig. 3 is a sectional view of the retractor shown in Fig. 2 along line A-A.
First, the structure of a seat belt apparatus 100 as one embodiment of a "seat belt apparatus" according to the present invention will be described with reference to Fig. 1 through Fig. 3.

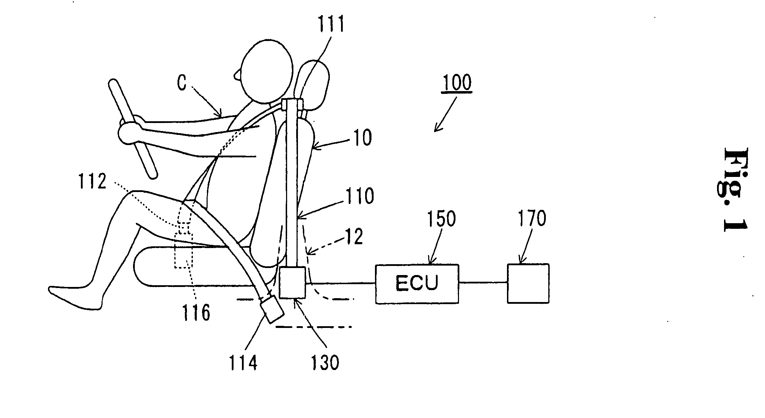

The schematic structure of the seat belt apparatus 100, which is installed in a vehicle, of the embodiment according to the present invention is shown in Fig. 1.

As shown in Fig. 1, the seat belt apparatus 100 of this embodiment is a seat belt apparatus for a vehicle to be installed in an automotive vehicle as "a vehicle with a seat belt apparatus" and mainly consists of a seat belt 110, a retractor 130, and an ECU 150. In addition, an input element 170 is installed in the vehicle to detect information about collision prediction or collision occurrence of the vehicle, information about the driving state of the vehicle, information about the sitting position and the body size of a vehicle occupant seated in a vehicle seat, information about traffic conditions around the vehicle, information about weather condition and about time zone, and the like and to input such detected information to the ECU 150. The detected information of the input element 170 is transmitted to the ECU 150 anytime or at predetermined intervals and is used for the operation control of the seat belt apparatus 100 and the like.

The seat belt 110 is a long belt (webbing) to be used for restraining a vehicle occupant C seated in a vehicle seat 10 as a driver's seat (corresponding to the "seat" of the present invention). The seat belt 110 is withdrawn from the retractor 130 fixed to the vehicle and extends through a deflection fitting 111 provided around an area about the shoulder of the vehicle occupant C and is connected to an outer anchor 114 through a tongue 112. The deflection fitting 111 has a function of holding the seat belt 110 to the area about the shoulder of the occupant C and guiding the seat belt 110. By inserting the tongue 112 to a buckle 116 fixed to the vehicle body, the seat belt 110 reaches the state in which it is worn by the vehicle occupant C. The seat belt 110 corresponds to the "seat belt" of the present invention.

The retractor 130 is a device capable of performing the action of winding or unwinding the seat belt 110 by a spool 132 as will be described later and corresponds to the "seat belt retractor" of the present invention. The retractor 130 is installed in an accommodating space in a B-pillar 12 of the vehicle in the embodiment shown in Fig. 1.

The ECU 150 has a function of conducting the control of the retractor 130 and other operational mechanisms based on the input signals from the input element 170 and comprises a CPU (Central processing unit), an input/output unit, a storage unit, a peripheral unit, and the like. Particularly in this embodiment, the ECU 150 controls a motor 133, as will be described later, of the retractor 130. Specifically, the ECU 150 controls the amount of current supplied to an electromagnetic coil of the motor 133 and the direction of the current so as to vary the rotational speed or the rotational direction of a shaft of the motor 133. The ECU 150 corresponds to the "control means" of the present invention and the input element 170 for inputting input signals to the ECU 150 corresponds to the "input element" of the present invention.

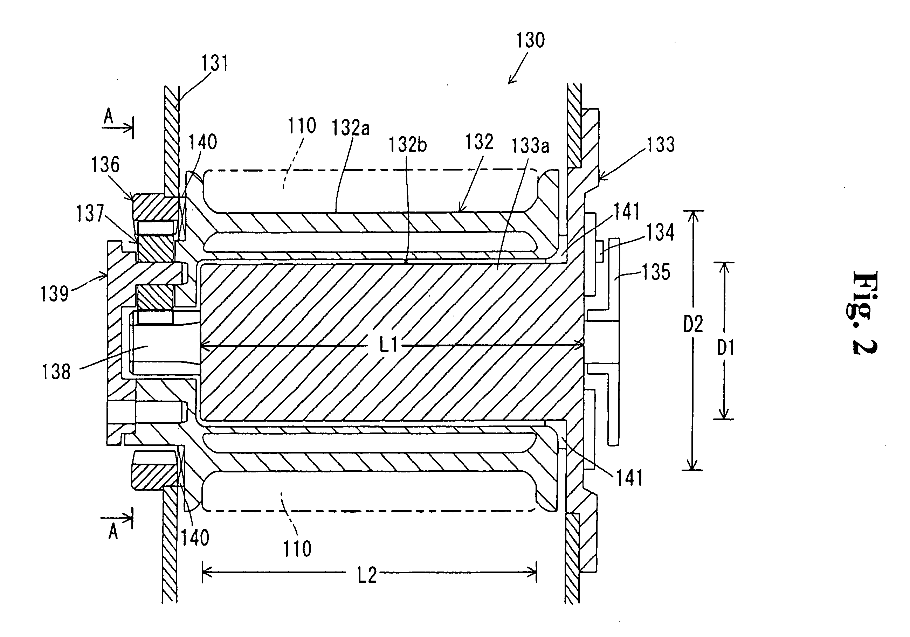

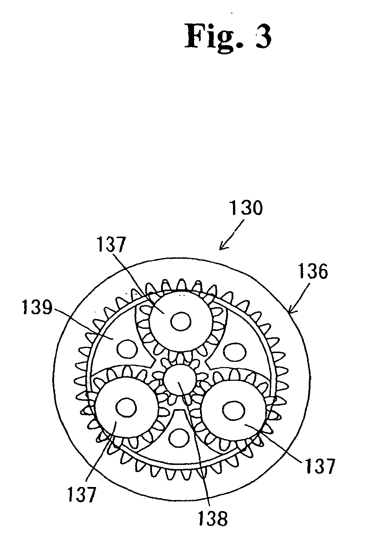

Referring to Fig. 2 and Fig. 3, the retractor 130 will be described in detail. Fig. 2 is a sectional view of the retractor 130 shown in Fig. 1 and Fig. 3 is a sectional view on arrows of a line A-A of the retractor 130 shown in Fig. 2.

As shown in Fig. 2, the retractor 130 of this embodiment comprises a base frame (retractor body frame) 131, which is fixed to the vehicle body, and further comprises the spool (winding shaft) 132, the motor 133, a Hall sensor 134, a magnetic disc 135, an internal gear 136, planetary gears 137, a sun gear 138, a carrier 139, and bearings 140, 141 which are assembled inside the base frame 131.

The spool 132 of the retractor 130 is a member rotatably supported to the base frame 131 and corresponds to the "spool" of the present invention. Specifically, the bearing 140 lies between the spool 132 and the internal gear 136 which is a fixed member and the bearing 141 lies between the spool 132 and the body of the motor 133 which is a fixed member, whereby the spool 132 is rotatable relative to the fixed members. That is, the spool 132 and a motor housing 133a of the motor 133 are supported by each other via the bearing mechanism (bearing 140) disposed between the outside surface of the spool and the inside surface of the internal gear and the bearing mechanism (bearing 141) disposed between the inner periphery of the spool and the outer periphery of the motor housing. According to this structure, the rotation of the spool 132 relative to the motor housing 133a is allowed by the simple bearing structure.

In the retractor 130, the seat belt 110 is wound onto a spool outer periphery 132a of the spool 132 or the seat belt 110 is unwound from the spool outer periphery 132a of the spool 132. That is, the spool outer periphery 132a of the spool 132 is a surface with which the seat belt 110 is in contact. The shaft of the motor 133 is rotated in one direction so as to conduct operation of unwinding the seat belt from the spool 132, while the shaft of the motor 133 is rotated in the other direction so as to conduct operation of winding the seat belt 110 onto the spool 132. Details about this will be described later. According to the structure in which the spool is rotated by the motor, such as in this embodiment, a spring mechanism for biasing the spool 132 in the belt winding direction can be eliminated. The spring mechanism is generally located adjacent to the spool in the width direction of the spool 132. Therefore, the elimination of the spring mechanism reduces the size relating to the width direction of the spool 132, thereby enabling the reduction in overall size of the retractor 130.

The spool 132 is formed into a hollow cylindrical shape of which one end is closed and the other end is open. The motor 133 is inserted into a cylindrical hollow space 132b through the open end and is accommodated in the hollow space 132b. In the state in which the motor 133 is accommodated in the hollow space 132b of the spool 132, the motor housing 133a of the motor 133 extends along the width direction of the spool outer periphery 132a of the spool 132 such that the axial direction of the motor 133 coincides with the width direction of the spool outer periphery 132a.

In the state in which the motor 133 is accommodated, three dimensions, i.e., the size L1 of the motor housing 133a of the motor 133 in the axial direction, the size L2 of the spool outer periphery 132a of the spool 132 in the width direction, and the width of the seat belt 110 are broadly equal to each other. That is, in this embodiment, the size of the motor housing 133a in the axial direction and the size of the spool outer periphery 132a in the width direction are set to correspond to the standard width of the seat belt 110. As shown in Fig. 2, in this embodiment, the overall size of the spool 132 in the width direction is nearly equal to the size of the spool outer periphery 132a in the width direction. That is, the four dimensions, i.e. the overall size of the spool 132 in the width direction, the size L1 of the motor housing 133a in the axial direction, the size L2 of the spool outer periphery 132a in the width direction, and the width of the seat belt 110 are broadly equal to each other.

According to this structure, the width of the spool 132 can be reduced to correspond to the size of the motor housing 133a in the axial direction, thereby reducing the overall size relating to the axial direction of the retractor 130. Therefore, the miniaturization of the retractor 130 and the seat belt apparatus 100 to be installed in the vehicle is achieved, thereby increasing the degree of freedom of location of the seat belt retractor 130 and the seat belt apparatus 100 in the vehicle. The motor housing 133a is designed to have the maximum size in the axial direction within the range of the width of the spool 132, allowing the use of a motor with higher output.

According to the structure of this embodiment in which the motor 133 is accommodated in the cylindrical space of the spool 132, a reduction in size and a reduction in weight of the retractor 130 are achieved and, in addition, the noise insulation and the electromagnetic-wave shielding in the operation of the motor are improved.

In this embodiment, it is preferable that the ratio of the outside diameter D1 of the motor housing 133a of the motor 133 relative to the outside diameter D2 of the spool outer periphery 132a of the spool 132, i.e. D1/D2, is set to be 0.8 or less. For example, the outside diameter D1 of the motor 133 may be 40 mm and the outside diameter D2 of the spool outer periphery 132a of the spool 132 may be 55 mm, or any other values which fulfill D1/D2 being less than or equal to 0.8. According to this structure, the size of the spool 132 in the radial direction can be reduced to correspond to the size of the motor 133 in the radial direction, thereby enabling the reduction in overall size relating to the radial direction of the retractor 130.

The motor 133 of this embodiment is an electric motor of a type, so-called "brushless motor of inner rotor type". The motor 133 corresponds to the "motor" of the present invention. The motor 133 uses a magnet as a rotor and a coil as a stator which are accommodated in the motor housing 133a. The stator is disposed around the rotor. The motor 133 is structured such that the motor shaft is rotated according to the rotation of the rotor. In the motor 133, the Hall sensor (a magnetic position detector) 134 is mounted on a side of the motor housing 133a and the magnetic disc 135 is mounted on a side of the rotor. The Hall sensor 134 and the magnetic disc 135 cooperate together to detect the position of the rotor. From the information of the detection, the amount of winding or unwinding the seat belt 110 is obtained. Based on the amount of winding or unwinding of the seat belt 110, the rotational speed of the motor and the load of the motor can be controlled. In this embodiment, as mentioned above, the position detecting means of the rotor in the motor 133 is also used as a means for detecting the amount of winding or unwinding the seat belt 110. Therefore, the use of the brushless motor structured similarly to this motor 133 can eliminate sensors for exclusive use of detecting the rotational speed and rotational direction of the rotor and of detecting the amount of winding or unwinding the seat belt. This is economical. The brushless motor structured similarly to the motor 133 is effective for reducing the size of the body, improving the output, and improving the heat radiation property.

As shown in Fig. 2 and Fig. 3, the shaft of the motor 133 is adapted to have the sun gear 138. Three planetary gears 137 mesh with the outer periphery of the sun gear 138. The outer peripheries of the planetary gears 137 mesh with inner periphery of the internal gear 136. That is, a gear train, so-called "planetary gear mechanism" is constructed in which the planetary gears 137 are arranged between the internal gear 136 and the sun gear 138. The internal gear 136 is fixed to the base frame 131. The planetary gears 137 are rotatably supported by the carrier 139 and the spool 132 is connected to the carrier 139. The internal gear 136, the planetary gears 137, the sun gear 138 compose together a speed-reduction mechanism (corresponding to the "motor speed-reduction mechanism" of the present invention) of the motor 133. In this embodiment, the motor speed-reduction mechanism is located adjacent to the motor housing 133a relative to the axial direction of the motor housing 133a. Further in this embodiment, the plural gears composing the motor speed-reduction mechanism are arranged to extend on the same plane in a direction perpendicular to the axial direction of the shaft of the motor. According to the structure, the size relating to the axial direction of the motor speed-reduction mechanism can be reduced by arrangement of the plural gears, thereby further reducing the overall size relating to the axial direction of the retractor 130 including the motor speed-reduction mechanism. Therefore, the reduction in size of the retractor 130 and the seat belt apparatus 100 to be installed in the vehicle is achieved.

In this embodiment, the three dimensions, i.e. the first size relating to the width direction of the spool outer periphery 132a, the second size which is the size relating to the axial direction of the motor housing 133a plus the size relating to the axial direction of the motor speed-reduction mechanism, and the width of the seat belt 110 are broadly approximately equal to each other. That is, in this embodiment, the first size and the second size are set to correspond to the standard width of the seat belt 110. As shown in Fig. 2, in this embodiment, the overall size of the spool 132 in the width direction is nearly equal to the size of the spool outer periphery 132a in the width direction. That is, the four dimensions, i.e. the overall size of the spool 132 in the width direction, the first size, the second size, and the width of the seat belt 110 are broadly equal to each other. According to this structure, the width of the spool 132 can be reduced to correspond to the size of the combination of the motor housing 133a with the motor speed-reduction mechanism in the axial direction, thereby reducing the overall size relating to the axial direction of the seat belt retractor.

In this embodiment, the shaft as the rotational axis of the motor 133, the spool shaft as the rotational axis of the spool 132, the speed-reduction shaft as the rotational axis of the sun gear 138 as one component of the speed-reduction mechanism are generally aligned in a straight line. According to the structure, the simplification and miniaturization of the motor speed-reduction mechanism are achieved.

In the aforementioned structure of the retractor 130, as the shaft of the motor 133 is rotated, the three planetary gears 137 meshing with the sun gear 138 move around the speed-reduction shaft of the sun gear 138, whereby the spool 132 rotates via the carrier 139. For example, when the sun gear 138 rotates about the speed-reduction shaft in the clockwise direction in Fig. 3, the three planetary gears 137 move around the sun gear 138 in the clockwise direction. On the other hand, when the sun gear 138 rotates about the speed-reduction shaft in the counterclockwise direction, the three planetary gears 137 move around the sun gear 138 in the counterclockwise direction. During this, the rotation of the motor 133 is transmitted to the spool 132 while the rotational speed is reduced to some fraction of the rotational speed of the motor and the torque is increased. By the rotation transmitted to the spool 132, the seat belt 110 is wound onto or unwound from the outer periphery of the spool 132.

In the seat belt apparatus 100 having the aforementioned structure, the control of the operation of the motor 133 of the retractor 130 is used when the restraint of the vehicle occupant is conducted or when the restraint of the vehicle occupant is cancelled. The control is suitably conducted by the ECU 150 based on the input signals from the input element 170 shown in Fig. 1. That is, the seat belt apparatus 100 of this embodiment has such a function that, based on the input signals from the input element 170, the ECU 150 controls the operation of the motor 133 to adjust the tension of the seat belt 110 so as to control the condition about the restraint of the vehicle occupant and therefore composes an occupant restraining system for a vehicle. Specifically, the following first through fifth modes may be employed.

In the first mode (putting-on mode), the motor 133 is controlled to be rotated in the belt unwinding direction to facilitate the vehicle occupant to withdraw the seat belt when the vehicle occupant inserts and latches the tongue to the buckle of the seat belt by his or her hand. Accordingly, the load and operation for withdrawing the seat belt can be relieved.

In the second mode (fitting mode), the motor 133 is controlled to be rotated in the belt winding direction to apply predetermined tension on the seat belt in the state that the seat belt is worn by the vehicle occupant. Accordingly, slack of the seat belt generated when the seat belt is withdrawn can be eliminated. If necessary, the motor 133 may be controlled to rotate a little in the belt winding direction or the belt unwinding direction to conduct fine adjustment for controlling comfort of the vehicle occupant wearing the seat belt.

In the third mode (pre-rewinding (restraining) mode), the motor 133 is controlled to rotate in the belt winding direction to apply strong tension on the seat belt when the seat belt is worn by the vehicle occupant. Accordingly, change in posture of the vehicle occupant due to a vehicle collision or emergency braking is inhibited so as to ensure the protection of the vehicle occupant.

In the fourth mode (warning mode), when danger or collision is predicted in the state the seat belt is used, the motor 133 is controlled to rotate in the belt winding direction or the belt unwinding direction to change tension on the seat belt so as to urge the vehicle occupant to pay attention. For example, the operation of applying strong tension and weak tension onto the seat belt is repeated, thereby preventing the vehicle occupant from dozing and thus ensuring the collision prevention.

In the fifth mode (storing mode), the motor 133 is controlled to rotate in the belt winding direction to facilitate the vehicle occupant to store the seat belt after the vehicle occupant releases the latching of the tongue from the buckle. Accordingly, the load and operation for storing the seat belt can be relieved.

The present invention is not limited to the aforementioned embodiment, rather, various variations and modifications may be made. For example, the following embodiments as variations of the aforementioned embodiment may be carried out.

Though the retractor 130 described in the above embodiment is used for the vehicle occupant seated in the driver's seat and is accommodated in the accommodating space in the B-pillar, the present invention can be adopted to the structure of retractors for vehicle occupants seated in a passenger's seat and a rear seat. When the present invention is adopted to the structure of a retractor for a vehicle occupant seated in the rear seat, the retractor is accommodated in an accommodating space in a C-pillar in case of an automobile of a type having two rows of seats or the retractor is accommodated in an accommodating space in a C-pillar or a D-pillar in case of an automobile of a type having three rows of seats. The accommodating space in the C-pillar or the D-pillar is often limited in the longitudinal direction of the vehicle. Especially in such case, a retractor having reduced size in the width direction such as the retractor 130 in the embodiment is effective.

Though the above embodiment has been described with regard to the case that the retractor 130 is accommodated in the accommodating space in the pillar, the present invention can be adopted to the structure in which the retractor is accommodated in an accommodating space in a member other than the pillar. For example, a vehicle seat such as a driver's seat or a passenger's seat as a first-row seat, or a seat as a second- or third-row seat may be provided with an accommodating space inside thereof and the retractor 130 of the embodiment can be accommodated in the accommodating space inside the seat. The size of the seat is often limited in the longitudinal direction of the vehicle similarly to the vehicle pillar. Especially in this case, a retractor having reduced size in the width direction such as the retractor 130 in the embodiment is effective.

Though the above embodiment has been described with regard to the structure of the seat belt apparatus to be installed in an automobile, the present invention can be adopted to seat belt apparatus to be installed in a wide variety of vehicles other than automobiles such as an aircraft, a boat, and a train.

## Claims

1. A seat belt retractor comprising:
a spool (132) which is formed into a hollow cylindrical shape and is capable of winding a seat belt (110) onto a spool outer periphery (132a) thereof or unwinding the seat belt from the spool outer periphery (132a) thereof, wherein the seat belt (110) is adapted to be worn by a vehicle occupant seated in a seat;
a motor (133) which is accommodated in a hollow space (132b) of said spool (132) and rotates said spool (132) in the belt winding direction or the belt unwinding direction; and
a control means (150) for controlling the operation of said motor (133),
wherein in the state in which the motor (133) is accommodated, a motor housing (133a) of said motor (133) extends along the width direction of the spool outer periphery (132a) of said spool such that the axial direction of said motor (133) coincides with the width direction of the spool outer periphery (132a), and
wherein the size (L1) of said motor housing (133a) in the axial direction and the size (L2) of said spool outer periphery (132a) in the width direction are broadly approximately equal to each other,
**characterized in that**
the seat belt retractor further comprises a motor speed-reduction mechanism which reduces the rotational speed of the motor via a plurality of gears (136-138) between the driving shaft of said motor (133) and said spool (132).

2. A seat belt retractor as claimed in claim 1, wherein
the size of said motor housing (133a) in the axial direction and the size of said spool outer periphery (132a) in the width direction are also broadly approximately equal to the width of said seat belt (110).

3. A seat belt retractor comprising:
a spool (132) which is formed into a hollow cylindrical shape and is capable of winding a seat belt (110) onto a spool outer periphery (132a) thereof or unwinding the seat belt (110) from the spool outer periphery (132a) thereof, wherein the seat belt (110) is adapted to be worn by a vehicle occupant seated in a seat;
a motor (133) which is accommodated in a hollow space (132b) of said spool (132) and rotates said spool (132) in the belt winding direction or the belt unwinding direction; and
a control means (150) for controlling the operation of said motor (133),
wherein in the state in which the motor (133) is accommodated, a motor housing (132a) of said motor (133) extends along the width direction of the spool outer periphery (132a) of said spool such that the axial direction of said motor housing (133a) coincides with the width direction of the spool outer periphery (132a),
**characterized in that**
the seat belt retractor further comprises a motor speed-reduction mechanism which reduces the rotational speed of the motor (133) via a plurality of gears (136-138) between the shaft of said motor (133) and said spool (132),
wherein in the state in which the motor is accommodated, said motor speed-reduction mechanism is disposed adjacent to said motor housing (133a) relative to the axial direction of said motor housing, and
wherein a first size (L2) relating to the width direction of said spool outer periphery (132a) and a second size which is the size (L1) relating to the axial direction of said motor housing (133a) plus the size relating to the axial direction of said motor speed-reduction mechanism are broadly approximately equal to each other.

4. A seat belt retractor as claimed in claim 3, wherein said first size and said second size are also broadly approximately equal to the width of said seat belt (110).

5. A seat belt retractor as claimed in any one of claims 1-4, wherein
the plural gears (136-138) of said motor speed-reduction mechanism are arranged to extend on the same plane perpendicular to the axial direction of said motor housing (133a).

6. A seat belt retractor as claimed in any one of claims 1 through 5, wherein
said spool (132) and said motor housing (133a) are supported by each other via a bearing mechanism (140, 141) disposed between the inner periphery of the spool (132) and the outer periphery of the motor housing (133a).

7. A seat belt retractor as claimed in any one of claims 1 through 6, wherein
the seat belt retractor (130) is adapted to be accommodated in an accommodating space in a rear pillar (12) of an automobile which is located on the rear side of the A-pillar of the automobile.

8. A seat belt retractor,as claimed in any one of claims 1 through 6, wherein
the seat belt retractor (130) is adapted to be accommodated in an accommodating space in a seat of an automobile.

9. A seat belt retractor as claimed in claim 7 or 8, wherein
in the state in which the seat belt retractor is accommodated in said accommodating space, the spool outer periphery (132a) of said spool extends in the longitudinal direction of a vehicle, and the size of said spool outer periphery (132a) in the width direction and the size of said accommodating space in the longitudinal direction of the vehicle are broadly approximately equal to each other.

10. A seat belt apparatus comprising:
a seat belt retractor (130) as claimed in any one of claims 1 through 9, and
a seat belt (110) to be worn by a vehicle occupant seated in a seat, which can be wound onto or unwound from a spool outer periphery (132a) of a spool (132) of said seat belt retractor (130).

11. A vehicle with a seat belt apparatus, wherein said seat belt apparatus as claimed in claim 10 is accommodated in an accommodating space in a pillar (12) or an accommodating space in a seat.

## Patentansprüche

1. Sitzgurtaufrollvorrichtung umfassend:
eine Rolle (132), welche in einer hohlen zylindrischen Form ausgebildet ist und in der Lage ist, einen Sitzgurt (110) auf einen äußeren Umfang (132a) der Rolle aufzuwickeln oder den Sitzgurt von dem äußeren Umfang (132a) der Rolle abzuwickeln, wobei der Sitzgurt (110) derart ausgestaltet ist, dass er von einem Fahrzeuginsassen, welcher in einem Sitz sitzt, getragen wird;
einen Motor (133), welcher in einem Hohlraum (132b) der Rolle (132) untergebracht ist und die Rolle (132) in der den Gurt aufwickelnden Richtung oder in der den Gurt abwickelnden Richtung dreht; und
Steuermittel (150), um den Betrieb des Motors (133) zu steuern,
wobei sich in dem Zustand, in welchem der Motor (133) untergebracht ist, ein Motorgehäuse (133a) des Motors (133) entlang der Breitenrichtung des äußeren Umfangs (132a) der Rolle erstreckt, so dass die axiale Richtung des Motors (133) mit der Breitenrichtung des äußeren Umfangs (132a) der Rolle übereinstimmt, und
wobei sich die Ausmaße (L1) des Motorgehäuses (133a) in der axialen Richtung und die Ausmaße (L2) des äußeren Umfangs (132a) der Rolle in der Breitenrichtung näherungsweise einander entsprechen,
**dadurch gekennzeichnet,**
**dass** die Sitzgurtaufrollvorrichtung darüber hinaus einen Mechanismus zur Verringerung der Motorgeschwindigkeit umfasst, welcher die Drehgeschwindigkeit des Motors über mehrere Zahnräder (136-138) zwischen der Antriebswelle des Motors (133) und der Rolle (132) verringert.

2. Sitzgurtaufrollvorrichtung nach Anspruch 1,
**dadurch gekennzeichnet,**
**dass** die Ausmaße des Motorgehäuses (133a) in der axialen Richtung und die Ausmaße des äußeren Umfangs (132a) der Rolle in der Breitenrichtung auch näherungsweise der Breite des Sitzgurts (110) entsprechen.

3. Sitzgurtaufrollvorrichtung umfassend:
eine Rolle (132), welche in einer hohlen zylindrischen Form ausgebildet ist und in der Lage ist, einen Sitzgurt (110) auf einen äußeren Umfang (132a) der Rolle aufzuwickeln oder den Sitzgurt von dem äußeren Umfang (132a) der Rolle abzuwickeln, wobei der Sitzgurt (110) derart ausgestaltet ist, dass er von einem Fahrzeuginsassen, welcher in einem Sitz sitzt, getragen wird;
einen Motor (133), welcher in einem Hohlraum (132b) der Rolle (132) untergebracht ist und die Rolle (132) in der den Gurt aufwickelnden Richtung oder in der den Gurt abwickelnden Richtung dreht; und
Steuermittel (150), um den Betrieb des Motors (133) zu steuern,
wobei sich in dem Zustand, in welchem der Motor (133) untergebracht ist, ein Motorgehäuse (133a) des Motors (133) entlang der Breitenrichtung des äußeren Umfangs (132a) der Rolle erstreckt, so dass die axiale Richtung des Motors (133) mit der Breitenrichtung des äußeren Umfangs (132a) der Rolle übereinstimmt,
**dadurch gekennzeichnet,**
**dass** die Sitzgurtaufrollvorrichtung darüber hinaus einen Mechanismus zur Verringerung der Motorgeschwindigkeit umfasst, welcher die Drehgeschwindigkeit des Motors (133) über mehrere Zahnräder (136-138) zwischen der Antriebswelle des Motors (133) und der Rolle (132) verringert,
**dass** in dem Zustand, in welchem der Motor untergebracht ist, der Mechanismus zur Verringerung der Motorgeschwindigkeit neben dem Motorgehäuse (133a) relativ zu der axialen Richtung des Motorgehäuses angeordnet ist, und
**dass** sich ein erstes Ausmaß (L2) bezüglich der Breitenrichtung des äußeren Umfangs (132a) der Rolle und ein zweites Ausmaß, welches dem Ausmaß (L1) bezüglich der axialen Richtung des Motorgehäuses (133a) zuzüglich dem Ausmaß bezüglich der axialen Richtung des Mechanismus zur Verringerung der Motorgeschwindigkeit entspricht, näherungsweise einander entsprechen.

4. Sitzgurtaufrollvorrichtung nach Anspruch 3,
**dadurch gekennzeichnet,**
**dass** das erste Ausmaß und das zweite Ausmaß näherungsweise der Breite des Sitzgurtes (110) entsprechen.

5. Sitzgurtaufrollvorrichtung nach einem der Ansprüche 1 bis 4,
**dadurch gekennzeichnet,**
**dass** die mehreren Zahnräder (136-138) des Mechanismus zur Verringerung der Motorgeschwindigkeit derart angeordnet sind, dass sie sich auf derselben Ebene senkrecht zu der axialen Richtung des Motorgehäuses (133a) erstrecken.

6. Sitzgurtaufrollvorrichtung nach einem der Ansprüche 1 bis 5,
**dadurch gekennzeichnet,**
**dass** die Rolle (132) und das Motorgehäuse (133a) jeweils miteinander über einen Lagermechanismus (140, 141), welcher zwischen dem inneren Umfang der Rolle (132) und dem äußeren Umfang des Motorgehäuses (133a) angeordnet ist, gehalten sind.

7. Sitzgurtaufrollvorrichtung nach einem der Ansprüche 1 bis 6,
**dadurch gekennzeichnet,**
**dass** die Sitzgurtaufrollvorrichtung (130) derart ausgestaltet ist, dass sie in einem aufnehmenden Raum in einer hinteren Säule (12) eines Fahrzeugs, welche hinter der A-Säule des Fahrzeugs angeordnet ist, unterbringbar ist.

8. Sitzgurtaufrollvorrichtung nach einem der Ansprüche 1 bis 6,
**dadurch gekennzeichnet,**
**dass** die Sitzgurtaufrollvorrichtung (130) derart ausgestaltet ist, dass sie in einem aufnehmenden Raum in einem Sitz eines Fahrzeugs unterbringbar ist.

9. Sitzgurtaufrollvorrichtung nach Anspruch 7 oder 8,
**dadurch gekennzeichnet,**
**dass** sich in dem Zustand, in welchem die Sitzgurtaufrollvorrichtung in dem aufnehmenden Raum untergebracht ist, der äußere Umfang (132a) der Rolle in der Längsrichtung eines Fahrzeugs erstreckt, und dass sich die Ausmaße des äußeren Umfangs (132a) der Rolle in der Breitenrichtung und die Ausmaße des aufnehmenden Raums in der Längsrichtung des Fahrzeugs näherungsweise einander entsprechen.

10. Sitzgurtvorrichtung umfassend:
eine Sitzgurtaufrollvorrichtung (130) nach einem der Ansprüche 1 bis 9, und
einen Sitzgurt (110), welcher von einem Fahrzeuginsassen, der in einem Sitz sitzt, zu tragen ist und welcher von einem äußeren Umfang (132a) einer Rolle (132) der Sitzgurtaufrollvorrichtung (130) aufgewickelt oder abgewickelt werden kann.

11. Fahrzeug mit einer Sitzgurtvorrichtung nach Anspruch 10, wobei die Sitzgurtvorrichtung in einem aufnehmenden Raum in einer Säule (12) oder in einem aufnehmenden Raum in einem Sitz untergebracht ist.

## Revendications

1. Un enrouleur de ceinture de sécurité comprenant :
une bobine (132) qui est réalisée en une forme cylindrique creuse et qui est capable d'enrouler une ceinture de sécurité (110) sur la périphérie externe (132a) de la bobine ou de dérouler la ceinture de sécurité à partir de la périphérie externe (132a) de la bobine, dans lequel la ceinture de sécurité (110) est adaptée pour être mise par un occupant de véhicule assis dans un siège ;
un moteur (133) qui est logé dans un espace creux (132b) de ladite bobine (132) et qui fait tourner ladite bobine (132) selon la direction d'enroulement ou de déroulement de la ceinture ; et
un moyen de commande (150) pour commander le fonctionnement dudit moteur (133),
dans lequel, selon l'état dans lequel le moteur (133) est logé, un boîtier de moteur (133a) dudit moteur (133) s'étend selon la direction de largeur de la périphérie externe de la bobine (132a) de sorte que la direction axiale dudit moteur (133) se confond avec la direction de largeur de la périphérie externe (132a) de la bobine, et
dans lequel la dimension (L1) dudit boîtier de moteur (133a) selon la direction axiale et la dimension (L2) de ladite périphérie externe (132a) de la bobine selon la direction de sa largeur sont globalement approximativement égales l'une à l'autre,
**caractérisé en ce que**
l'enrouleur de ceinture de sécurité comprend en outre un mécanisme motoréducteur qui diminue la vitesse de rotation du moteur par l'intermédiaire d'une pluralité d'engrenages (136-138) entre l'arbre d'entraînement dudit moteur (133) et ladite bobine (132).

2. Un enrouleur de ceinture de sécurité selon la revendication 1, dans lequel
la dimension dudit boîtier de moteur (133a) selon la direction axiale et la dimension de la périphérie externe (132a) de la bobine selon la direction de sa largeur sont globalement approximativement égale à la largeur de la ceinture de sécurité (110).

3. Un enrouleur de ceinture de sécurité comprenant :
une bobine (132) qui est réalisée en une forme cylindrique creuse et qui est capable d'enrouler une ceinture de sécurité (110) sur la périphérie externe (132a) de la bobine ou de dérouler la ceinture de sécurité à partir de la périphérie externe (132a) de la bobine, dans lequel la ceinture de sécurité (110) est adaptée pour être mise par un occupant de véhicule assis dans un siège ;
un moteur (133) qui est logé dans un espace creux (132b) de ladite bobine (132) et qui fait tourner ladite bobine (132) selon la direction d'enroulement ou de déroulement de la ceinture ; et
un moyen de commande (150) pour commander le fonctionnement dudit moteur (133),
dans lequel, selon l'état dans lequel le moteur (133) est logé, un boîtier de moteur (133a) dudit moteur (133) s'étend selon la direction de largeur de la périphérie externe de la bobine (132a) de sorte que la direction axiale dudit boîtier de moteur (133a) se confond avec la direction de largeur de la périphérie externe (132a) de la bobine,
**caractérisé en ce que**
l'enrouleur de ceinture de sécurité comprend en outre un mécanisme motoréducteur qui diminue la vitesse de rotation du moteur (133) par l'intermédiaire d'une pluralité d'engrenages (136-138) entre l'arbre dudit moteur (133) et ladite bobine (132),dans lequel selon l'état dans lequel le moteur est logé, ledit mécanisme motoréducteur est disposé adjacent audit boîtier de moteur (133a) par rapport à la direction axiale dudit boîtier de moteur, et
dans lequel une première dimension (L2) selon le sens de la largeur de ladite périphérie externe (132a) de la bobine et une deuxième dimension qui est la dimension (L1) selon le sens axial dudit boîtier de moteur (133a) plus la dimension selon le sens axial dudit mécanisme motoréducteur sont globalement approximativement égales l'une à l'autre.

4. Un enrouleur de ceinture de sécurité selon la revendication 3, dans lequel
ladite première dimension et ladite deuxième dimension sont également globalement approximativement égale à la largeur de ladite ceinture de sécurité (110).

5. Un enrouleur de ceinture de sécurité selon l'une quelconque des revendications 1 à 4, dans lequel
la pluralité d'engrenages (136-138) dudit mécanisme motoréducteur est agencée pour s'étendre selon le même plan, perpendiculaire à la direction axiale dudit boîtier de moteur (133a).

6. Un enrouleur de ceinture de sécurité selon l'une quelconque des revendications 1 à 5, dans lequel
ladite bobine (132) et ledit boîtier de moteur (133a) sont supportés l'un par l'autre via un mécanisme de palier (140, 141) disposé entre la périphérie interne de la bobine (132) et la périphérie externe du boîtier de moteur (133a).

7. Un enrouleur de ceinture de sécurité selon l'une quelconque des revendications 1 à 6, dans lequel
l'enrouleur de ceinture de sécurité (130) est adapté pour être logé dans un espace de logement dans un pilier arrière (12) du véhicule automobile qui est situé du côté arrière du pilier A du véhicule automobile.

8. Un enrouleur de ceinture de sécurité selon l'une quelconque des revendications 1 à 6, dans lequel
l'enrouleur de ceinture de sécurité (130) est adapté pour être logé dans un espace de logement dans un siège d'un véhicule automobile.

9. Un enrouleur de ceinture de sécurité selon la revendication 7 ou la revendication 8, dans lequel
selon l'état dans lequel l'enrouleur de ceinture de sécurité est logé dans ledit espace de logement, la périphérie externe (132a) de la bobine s'étend selon la direction longitudinale d'un véhicule, et la dimension de ladite périphérie externe (132a) de la bobine selon la direction de la largeur et la dimension dudit espace de logement selon la direction de la longueur du véhicule sont globalement approximativement égales l'une à l'autre.

10. Un appareil formant une ceinture de sécurité comprenant :
un enrouleur de ceinture de sécurité (130) selon l'une quelconque des revendications 1 à 9, et
une ceinture de sécurité (110) destinée à être mise par l'occupant de véhicule assis dans un siège, qui peut être enroulée et déroulée sur la périphérie externe de bobine (132a) d'une bobine (132) de l'enrouleur de ceinture de sécurité (130).

11. Un véhicule muni d'un appareil formant ceinture de sécurité, dans lequel ledit appareil formant ceinture de sécurité selon la revendication 10 est logé dans un espace de logement au sein d'un pilier (12) ou un espace de logement dans un siège.
